# EUROPÄISCHE PATENTSCHRIFT

(11) **EP 3 533 603 B1**
(45) Veröffentlichungstag und Bekanntmachung des Hinweises auf die Patenterteilung: **03.09.2025**
(21) Anmeldenummer: 19168699.7
(22) Anmeldetag: 22.02.2018
(51) Int. Cl.: B32B 7/02, B32B 7/12, B32B 27/08, B32B 27/30, B32B 27/32, B32B 27/34, B32B 1/08, B60K 15/01

(54) **MEHRSCHICHTIGE KRAFTFAHRZEUG-ROHRLEITUNG**
MULTILAYER MOTOR VEHICLE PIPELINE
CONDUITE DU VÉHICULE AUTOMOBILE MULTICOUCHE

(43) Veröffentlichungstag der Anmeldung: 04.09.2019
(62) Teilanmeldung aus: 18158183.6
(73) Patentinhaber: TI Automotive (Fuldabrück) GmbH, 34277 Fuldabrück (DE)
(72) Erfinder: Zimmer, Werner, 34212 Melsungen/Röhrenfurth (DE); Fahrenholz, Frank, 34128 Kassel (DE); Arnold, Siegfried, 34128 Kassel (DE); Schramowski, Martin, 34134 Kassel (DE)
(74) Vertreter: Novagraaf Group

(56) Entgegenhaltungen:
- EP-A1- 1 574 330
- EP-A1- 2 772 354
- DE-A1- 102011 089 616
- US-A1- 2006 083 884

## Beschreibung

Die Erfindung betrifft eine mehrschichtige Kraftfahrzeug-Rohrleitung, insbesondere zur Durchleitung von Kraftstoffen, wobei die Rohrleitung zumindest fünf Schichten aufweist. Die erfindungsgemäße mehrschichtige Kraftfahrzeugrohrleitung wird insbesondere als Kraftstoffrohrleitung in Fahrzeugen eingesetzt. Dabei kann die Kraftfahrzeugrohrleitung auch als Entlüftungsleitung in Tankentlüftungssystemen verwendet werden. In diesem Fall wird die Rohrleitung insbesondere mit Kraftstoffdämpfen und ihren Kondensaten beaufschlagt.

In EP 1 574 330 A1 ist eine mehrlagige Struktur offenbart, die für Kraftstofftanks oder Kraftstoffrohre genutzt werden kann. Die mehrlagige Struktur umfasst wenigstens zwei Polyamidschichten sowie eine dazwischengeschaltete EVOH-Schicht.

In EP 2 772 354 A1 ist eine mehrschichtige Kraftstoffrohrleitung offenbart, welche eine Sperrschicht aus EVOH umfasst. Die Sperrschicht ist zwischen zwei Polyamidschichten angeordnet.

Mehrschichtige Kraftfahrzeug-Rohrleitungen der vorstehend genannten Art sind aus der Praxis in unterschiedlichen Ausführungsformen bekannt. Viele dieser bekannten Rohrleitungen weisen den Nachteil auf, dass die Rohrleitungsschichten beim Durchleiten von Kraftstoffen unerwünschten Auswaschungen von Schichtkomponenten ausgesetzt sind. Das betrifft vor allem die in Kontakt mit dem Kraftstoff stehende Innenschicht, aber auch die angrenzenden mittleren Schichten. Oftmals enthalten die Innenschichten in geringen Mengen Oligomere, die von dem Kraftstoff ausgewaschen werden können und sich dann im Kraftstoffsystem niederschlagen. Dort können sie zu Problemen führen, insbesondere an Düsen und dergleichen. Die bekannten Rohrleitungen lassen im Hinblick auf ihre Kraftstoffbeständigkeit bzw. im Hinblick auf ihre Resistenz gegenüber den Kraftstoffen zu wünschen übrig. Nicht zuletzt aus diesem Grunde genügen auch die Barriereeigenschaften dieser bekannten Rohrleitungen nicht allen Anforderungen. Man hat bereits versucht, dieses Problem durch Variierung der Schichten - insbesondere der Innenschichten - zu lösen. Verbesserungen im Bezug auf unerwünschte Auswaschungen gingen hier aber zu Lasten der mechanischen Widerstandsfähigkeit und/oder der thermischen Resistenz der Rohrleitungen. Auch sind viele dieser bekannten Rohrleitungen aufgrund der Materialwahl nur kostspielig herstellbar. Das gilt vor allem für Kraftfahrzeugrohrleitungen mit Innenschichten aus Fluorpolymeren, insbesondere aus ETFE. ETFE hat weiterhin den Nachteil, dass es im Brandfall zu gefährlichen bzw. gesundheitsschädlichen Fluorverbindungen führt.

Demgegenüber liegt der Erfindung das technische Problem zugrunde, eine mehrschichtige Kraftfahrzeug-Rohrleitung der eingangs genannten Art anzugeben, bei der die vorstehend geschilderten Nachteile vermieden werden können, die sowohl eine verbesserte chemische Resistenz bzw. Resistenz gegen Auswaschungen als auch eine ausreichende mechanische Widerstandsfähigkeit sowie eine optimale Resistenz gegenüber verschiedenen Temperaturen, insbesondere höheren Temperaturen aufweist. Außerdem soll diese Rohrleitung möglichst kostengünstig herstellbar sein.

Zur Lösung des technischen Problems lehrt die Erfindung eine mehrschichtige Kraftfahrzeug-Rohrleitung, insbesondere zur Durchleitung von Kraftstoffen, wobei die Rohrleitung zumindest fünf Schichten aufweist und zwar mit folgendem Schichtaufbau von außen nach innen:
- eine Außenschicht aus zumindest einem Polyolefin,
- eine Trägerschicht aus Polyamid,
- eine Sperrschicht aus zumindest einer Komponente aus der Gruppe "Ethylen-Vinylalkohol-Copolymer (EVOH), Fluorpolymer",
- eine Zwischenschicht,
- eine Innenschicht aus Polyethylen,
wobei die erste Trägerschicht eine größere Dicke aufweist als die Sperrschicht, wobei die erste Trägerschicht eine größere Dicke aufweist als die Innenschicht, wobei die Zwischenschicht als zweite Trägerschicht ausgebildet ist und aus Polyamid besteht bzw. im Wesentlichen besteht, wobei die zweite Trägerschicht eine größere Dicke als die Innenschicht aufweist und wobei die Gesamtschichtdicke der Rohrleitung 0,7 bis 2,5 mm, vorzugsweise 0,8 bis 2 mm und bevorzugt 0,85 bis 1,8 mm beträgt. Ganz besonders bevorzugt ist eine Gesamtschichtdicke der Rohrleitung zwischen 0,85 und 1,7 mm.

Erfindungsgemäß besteht die Außenschicht aus Polyethylen bzw. im Wesentlichen aus Polyethylen. Dabei ist es besonders bevorzugt, dass die Außenschicht aus **HDPE** bzw. im Wesentlichen aus **HDPE** besteht. - Es empfiehlt sich, dass die Dicke der Außenschicht 5 % bis 60 %, vorzugsweise 7 % bis 45 % und bevorzugt 10 % bis 40 % der Gesamtwanddicke der Rohrleitung beträgt. Es liegt dabei im Rahmen der Erfindung, dass die Dicke der Außenschicht maximal 0,4 mm beträgt und bevorzugt im Bereich zwischen 0,1 und 0,4 mm, sehr bevorzugt im Bereich zwischen 0,2 und 0,4 mm liegt.

Eine besondere empfohlene Ausführungsform der Erfindung ist dadurch gekennzeichnet, dass zwischen der Außenschicht und der Trägerschicht zumindest eine Haftvermittlerschicht und vorzugsweise eine Haftvermittlerschicht zwischengeschaltet ist. Vorzugsweise wird eine Haftvermittlerschicht auf Basis von Polyamid oder auf Basis eines Polyolefins eingesetzt. Wenn eine Haftvermittlerschicht auf Basis von Polyamid verwendet wird, handelt es sich empfohlenermaßen um ein modifiziertes Polyamid, vorzugsweise um ein modifiziertes Polyamid auf Basis von Polyamid 612. - Wenn eine Haftvermittlerschicht auf Basis eines Polyolefins eingesetzt wird, handelt es sich vorzugsweise um ein mit einem Carbonsäurederivat, bevorzugt mit einem Maleinsäurederivat und sehr bevorzugt um ein mit Maleinsäureanhydrid modifiziertes Polyolefin, insbesondere Polyethylen. - Zweckmäßigerweise beträgt die Dicke der Haftvermittlerschicht 3 % bis 30 %, vorzugsweise 5 % bis 20 % und bevorzugt 5 % bis 15 % der Gesamtwanddicke der Rohrleitung. Die Dicke der Haftvermittlerschicht beträgt zweckmäßigerweise 0,03 bis 0,15 mm und vorzugsweise 0,03 bis 0,1 mm.

Eine sehr empfohlene Ausführungsform der Erfindung ist dadurch gekennzeichnet, dass die Trägerschicht aus Polyamid 6 bzw. im Wesentlichen aus Polyamid 6 besteht. Grundsätzlich kann die erste Trägerschicht auch aus zumindest einem bzw. aus einem Polyamid aus der Gruppe "Polyamid 612, Polyamid 12, Polyamid 10, Polyamid 11, Co-Polyamid 6/6.6, Co-Polyamid 6/12" bestehen bzw. im Wesentlichen bestehen. - Es liegt im Rahmen der Erfindung, dass die Dicke der Trägerschicht 5 % bis 70 %, vorzugsweise 10 % bis 60 % und bevorzugt 15 % bis 60 % der Gesamtwanddicke der Rohrleitung beträgt. Zweckmäßiger-weise ist die Dicke der Trägerschicht mindestens doppelt so dick und bevorzugt mindestens 3-mal so dick wie die Dicke der Haftvermittlerschicht. Es empfiehlt sich, dass die Dicke der Trägerschicht 0,1 bis 0,8 mm, vorzugsweise 0,1 bis 0,75 mm und bevorzugt 0,2 bis 0,6 mm beträgt. Nach bewährter Ausführungsform der Erfindung ist die Trägerschicht dicker als die Sperrschicht und vorzugsweise mindestens doppelt so dick wie die Sperrschicht. Nach einer Ausführungsvariante der Erfindung ist die Trägerschicht mindestens 2,5-mal so dick wie die Sperrschicht. Es liegt im Rahmen der Erfindung, dass die Trägerschicht dicker ist als die Außenschicht und empfohlermaßen mindestens 1,5-mal dicker ist als die Außenschicht.

Eine Ausführungsform, der im Rahmen der Erfindung besondere Bedeutung zukommt, ist dadurch gekennzeichnet, dass die Sperrschicht aus Ethylen-Vinylalkohol-Copolymer (EVOH) bzw. im Wesentlichen aus EVOH besteht. Dieses Material hat sich in Kombination mit den weiteren erfindungsgemäßen Schichten ganz besonders als Sperrschicht bewährt. - Es liegt im Rahmen der Erfindung, dass die Dicke der Sperrschicht 5 % bis 50 %, vorzugsweise 5 % bis 45 % und bevorzugt 10 % bis 40 % der Gesamtwanddicke der Rohrleitung beträgt. Zweckmäßigerweise beträgt die Dicke der Sperrschicht 0,05 bis 0,4 mm, vorzugsweise 0,05 bis 0,3 mm und bevorzugt 0,75 bis 0,25 mm.

Eine bevorzugte Ausführungsform der Erfindung ist dadurch gekennzeichnet, dass die Zwischenschicht aus Polyamid 6 bzw. im Wesentlichen aus Polyamid 6 besteht. Grundsätzlich kann die zweite Trägerschicht auch aus zumindest einem bzw. aus einem Polyamid aus der Gruppe "Polyamid 612, Polyamid 12, Polyamid 10, Polyamid 11, Co-Polyamid 6/6.6, Co-Polyamid 6/12" bestehen bzw. im Wesentlichen bestehen. Im Rahmen dieser bevorzugten Ausführungsform übernimmt die Zwischenschicht die Funktion einer zweiten Trägerschicht. Bezüglich dieser Ausführungsform wird nachfolgend die oben erläuterte Trägerschicht auch als erste Trägerschicht und die Zwischenschicht als zweite Trägerschicht bezeichnet. Es liegt im Rahmen der Erfindung, dass die Dicke der Zwischenschicht bzw. der zweiten Trägerschicht 5 % bis 70 %, vorzugsweise 10 % bis 60 % und bevorzugt 15 % bis 60 % sowie sehr bevorzugt 15 % bis 55 % der Gesamtwanddicke der Rohrleitung beträgt. Zweckmäßigerweise beträgt die Dicke der Zwischenschicht bzw. der zweiten Trägerschicht 0,1 bis 0,8 mm, vorzugsweise 0,1 bis 0,75 mm und bevorzugt 0,2 bis 0,6 mm. Es empfiehlt sich, dass die Zwischenschicht bzw. die zweite Trägerschicht dicker ist als die Sperrschicht und bevorzugt mindestens doppelt so dick ist wie die Sperrschicht. Gemäß einer Ausführungsvariante der Erfindung ist die Zwischenschicht bzw. die zweite Trägerschicht mindestens 2,5-mal so dick wie die Sperrschicht. Weiterhin liegt es im Rahmen der Erfindung, dass die Zwischenschicht bzw. die zweite Trägerschicht dicker ist als die Außenschicht und vorzugsweise mindestens 1,5-mal dicker ist als die Außenschicht.

Gemäß einer weiteren bevorzugten Ausführungsform der Erfindung ist die Zwischenschicht als Haftvermittlerschicht zwischen der Sperrschicht und der Innenschicht ausgebildet. Vorzugsweise handelt es sich dabei um eine Haftvermittlerschicht auf Basis eines Polyamids und/oder um eine Haftvermittlerschicht auf Basis eines Polyolefins. Diese Haftvermittlerschicht ist dann in der Ausführungsvariante mit der Haftvermittlerschicht zwischen der Außenschicht und der ersten Trägerschicht eine zweite Haftvermittlerschicht in der erfindungsgemäßen Rohrleitung. Zweckmäßigerweise gilt für diese zweite Haftvermittlerschicht analoges wie für die oben beschriebene erste Haftvermittlerschicht. Die dort beschriebenen Ausführungsformen treffen dann auch auf die zweite Haftvermittlerschicht zwischen Sperrschicht und Innenschicht zu. Das betrifft insbesondere das Material der Haftvermittlerschicht und/oder die Dicke der Haftvermittlerschicht.

Erfindungsgemäß besteht die Innenschicht aus Polyethylen bzw. im Wesentlichen aus Polyethylen. Nach sehr bevorzugter Ausführungsform, der im Rahmen der Erfindung ganz besondere Bedeutung zukommt, besteht die Innenschicht aus HDPE bzw. im Wesentlichen aus HDPE (High-density polyethylene). Dieser Werkstoff hat sich im Hinblick auf die Lösung des technischen Problems besonders bewährt. Diese Innenschicht wirkt gegenüber den Komponenten des die Rohrleitung durchströmenden Kraftstoffes bzw. Kraftstoffdampfes gleichsam als Sperrschicht und zeichnet sich durch eine sehr geringe Auswaschung von Schichtkomponenten aus. - Es liegt im Rahmen der Erfindung, dass die Dicke der Innenschicht 5 % bis 55 %, vorzugsweise 7 % bis 50 % und bevorzugt 10 % bis 40 % der Gesamtwanddicke der Rohrleitung beträgt. Zweckmäßigerweise beträgt die Dicke der Innenschicht 0,05 bis 0,45 mm, vorzugsweise 0,05 bis 0,4 mm und bevorzugt 0,1 bis 0,35 mm. Es liegt im Rahmen der Erfindung, dass die Dicke der Innenschicht geringer ist als die Dicke der Trägerschicht. Gemäß einer Ausführungsvariante der Erfindung wird die Innenschicht als elektrisch leitfähige Schicht eingerichtet und dazu mit Leitfähigkeitszusätzen versehen.

Wenn erfindungsgemäß die Zwischenschicht aus Polyamid besteht bzw. im Wesentlichen besteht (zweite Trägerschicht) liegt es fernerhin im Rahmen der Erfindung, dass diese Zwischenschicht bzw. zweite Trägerschicht eine größere Dicke aufweist als die Sperrschicht. Die erste Trägerschicht und/oder die zweite Trägerschicht ist zweckmäßigerweise mindestens 1,2-mal, vorzugsweise mindestens 1,5-mal und bevorzugt mindestens 1,8-mal dicker als die Sperrschicht.

Zweckmäßigerweise ist dabei die erste Trägerschicht und/oder die zweite Trägerschicht mindestens 1,2-mal und vorzugsweise mindestens 1,4-mal sowie bevorzugt mindestens 1,5-mal dicker als die Innenschicht. - Es liegt im Rahmen der Erfindung, dass die Außenschicht eine größere Dicke aufweist als die Sperrschicht. Vorzugsweise ist die Außenschicht mindestens 1,1-mal und bevorzugt mindestens 1,2-mal dicker als die Sperrschicht. - Gemäß empfohlener Ausführungsform der Erfindung ist die erste Trägerschicht und/oder die zweite Trägerschicht dicker als die Außenschicht. Vorzugsweise ist die erste Trägerschicht und/oder die zweite Trägerschicht mindestens 1,2-mal und bevorzugt mindestens 1,3-mal dicker als die Außenschicht.

Es liegt im Rahmen der Erfindung, dass die Außenschicht einen optimalen Schutz gegen Umwelteinflüsse gewährleistet. Zum Einen ist sie korrosionsbeständig bzw. chemisch resistent gegenüber Spritzwasser, insbesondere Salzwasser sowie chemisch resistent gegenüber Öl und Kraftstoff. Die beiden Trägerschichten gewährleisten insbesondere die mechanische Stabilität der erfindungsgemäßen Rohrleitung. Die Innenschicht hat wie die Sperrschicht eine Sperrwirkung und zwar insbesondere gegenüber den Komponenten des durch die Rohrleitung strömenden Kraftstoffes bzw. Kraftstoffdampfes.

Gemäß bevorzugter Ausführungsform der Erfindung wird die erfindungsgemäße Kraftfahrzeug-Rohrleitung durch Extrusion bzw. Koextrusion der Schichten hergestellt. Mit den erfindungsgemäßen Schichtkomponenten ist eine sehr einfache Koextrusion möglich und vor allem ist die Koextrusion bei moderaten Temperaturen durchführbar. - Die erfindungsgemäße Rohrleitung kann im Übrigen als glattes unprofiliertes Rohr oder auch als Wellrohr ausgebildet werden.

Der Erfindung liegt die Erkenntnis zugrunde, dass die erfindungsgemäße Kraftfahrzeug-Rohrleitung eine ausgezeichnete chemische Resistenz aufweist und vor allem gegenüber Auswaschungen von Schichtkomponenten resistent ist. Das gilt vor allem für die Innenschicht aber auch für die angrenzenden Schichten. Die erfindungsgemäße Rohrleitung weist optimale Barriereeigenschaften sowie eine sehr gute Kraftstoff- und Alterungsbeständigkeit auf. Von besonderem Vorteil ist dabei, dass ein und dieselbe erfindungsgemäße Rohrleitung für verschiedene Kraftstoffe eingesetzt werden kann und gegenüber diesen verschiedenen Kraftstoffen die vorgenannten Vorteile bietet. Hervorzuheben ist, dass die erfindungsgemäße Rohrleitung neben der erläuterten chemischen Resistenz auch eine ausgezeichnete mechanische Widerstandsfähigkeit aufweist. Fernerhin zeichnet sich die erfindungsgemäße Rohrleitung durch eine optimale thermische Resistenz aus und die Rohrleitung kann problemlos in einem Temperaturbereich zwischen -40°C und 140°C eingesetzt werden. Gegenüber vielen bislang bekannten Rohrleitungen ist die erfindungsgemäße Rohrleitung fernerhin sehr kostengünstig bzw. aus sehr kostengünstigen Materialien herstellbar. Zu betonen ist fernerhin, dass sich die Materialien der Schichten der erfindungsgemäßen Rohrleitung sehr einfach verarbeiten lassen und vor allem eine einfache und problemlose Koextrusion der erfindungsgemäßen Schichtenfolge möglich ist.

Nachfolgend wird die Erfindung anhand eines Ausführungsbeispiels näher erläutert:
Nach einer Ausführungsform der Erfindung besteht die Außenschicht aus HDPE bzw im Wesentlichen aus HDPE und weist zweckmäßigerweise eine Schichtdicke von 0,2 bis 0,4 mm auf. Innenseitig an die Außenschicht schließt nach bevorzugter Ausführungsform unmittelbar eine Haftvermittlerschicht an, die vorzugsweise aus einem mit Maleinsäureanhydrid modifizierten Polyolefin - insbesondere Polyethylen - besteht bzw. im Wesentlichen besteht und bevorzugt eine Schichtdicke von 0,03 mm bis 0,1 mm aufweist. Unmittelbar an die Haftvermittlerschicht schließt innenseitig die erste Trägerschicht an, die aus Polyamid 6 bzw. im Wesentlichen aus Polyamid 6 besteht und empfohlenermaßen eine Schichtdicke von 0,2 mm bis 0,75 mm aufweist. Innenseitig an die erste Trägerschicht schließt unmittelbar die Sperrschicht an, die aus EVOH bzw. im Wesentlichen aus EVOH besteht und bevorzugt eine Schichtdicke von 0,05 bis 0,3 mm aufweist. Unmittelbar an die Sperrschicht schließt innenseitig die Zwischenschicht an, die in diesem Ausführungsbeispiel als Haftvermittlerschicht ausgebildet ist und aus einem mit Maleinsäureanhydrid modifizierten Polyolefin, insbesondere Polyethylen besteht bzw. im Wesentlichen besteht. Diese Zwischenschicht bzw. zweite Haftvermittlerschicht weist vorzugsweise eine Schichtdicke zwischen 0,2 und 0,75 mm auf. Unmittelbar an die zweite Trägerschicht schließt innenseitig die Innenschicht an, die aus HDPE bzw. im Wesentlichen aus HDPE besteht und bevorzugt eine Schichtdicke von 0,1 bis 0,4 mm aufweist. Die Gesamtwandstärke dieser Rohrleitung liegt zweckmäßigerweise zwischen 0,8 und 2 mm.

Nachfolgend wird die Erfindung anhand einer lediglich ein Ausführungsbeispiel darstellenden Zeichnung näher erläutert. Es zeigen in schematischer Darstellung:

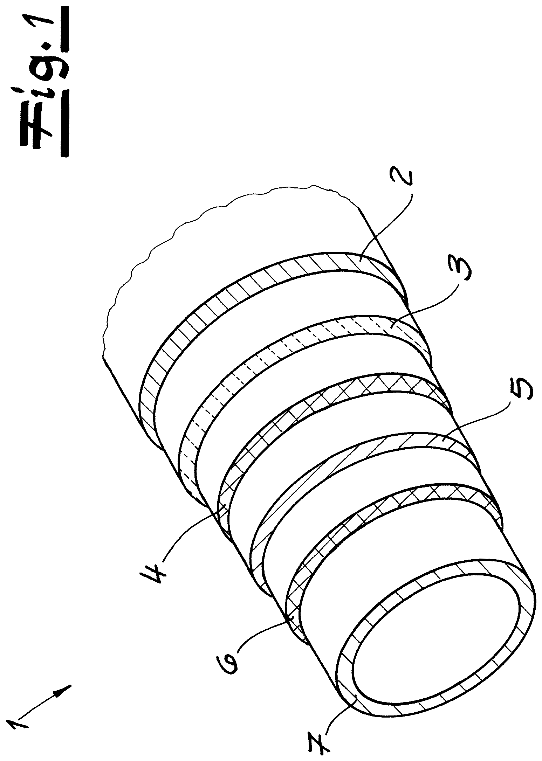

- **Fig. 1**: eine perspektivische Ansicht einer Rohrleitung und

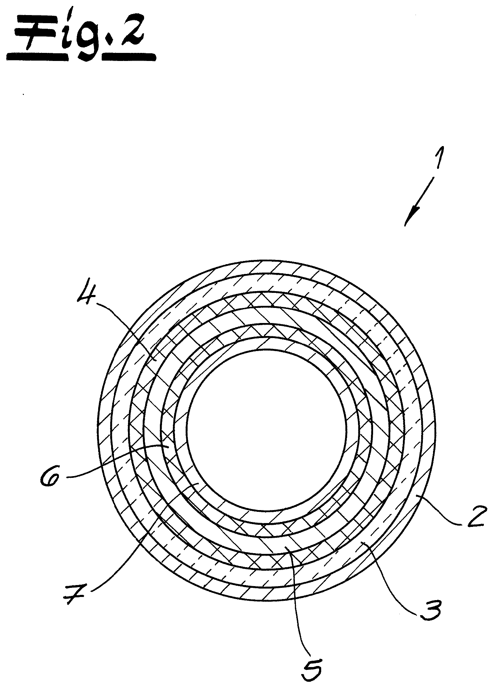

- **Fig. 2**: einen Schnitt durch den Gegenstand gemäß Fig. 1.

Im Ausführungsbeispiel nach den Figuren weist die Rohrleitung 1 eine Außenschicht 2 auf, die aus Polyamid 12 bzw. im Wesentlichen aus Polyamid 12 besteht und bevorzugt eine Schichtdicke zwischen 0,2 und 0,4 mm aufweist. An diese Außenschicht 2 schließt innenseitig eine Haftvermittlerschicht 3 an, die vorzugsweise und im Ausführungsbeispiel aus mit Maleinsäureanhydrid modifiziertem Polyamid 612 besteht. Daran schließt innenseitig die erste Trägerschicht 4 an, die bevorzugt und im Ausführungsbeispiel aus Polyamid 6 bzw. im Wesentlichen aus Polyamid 6 besteht und zweckmäßigerweise eine Schichtdicke zwischen 0,2 und 0,75 mm aufweist. Innenseitig an diese erste Trägerschicht 4 schließt die Sperrschicht 5 an, die bevorzugt und im Ausführungsbeispiel aus EVOH bzw. im Wesentlichen aus EVOH besteht und empfohlenermaßen eine Schichtdicke zwischen 0,1 und 0,3 mm aufweist. An diese Sperrschicht 5 schließt innenseitig die Zwischenschicht 6 in Form einer zweiten Trägerschicht an, die aus Polyamid 6 bzw. im Wesentlichen aus Polyamid 6 besteht und bevorzugt eine Schichtdicke zwischen 0,2 und 0,75 mm aufweist. Innenseitig an die Zwischenschicht 6 schließt die Innenschicht 7 an, die aus HDPE bzw. im Wesentlichen aus HDPE besteht und vorzugsweise eine Schichtdicke zwischen 0,1 und 0,4 mm aufweist. Die in den Figuren dargestellte mehrschichtige Kraftfahrzeug-Rohrleitung 1 wurde durch Koextrusion hergestellt. Es liegt im Rahmen der Erfindung, dass die Innenschicht 7 mit Leifähigkeitszusätzen versehen werden kann.

## Patentansprüche

1. Mehrschichtige Kraftfahrzeug-Rohrleitung (1), insbesondere zur Durchleitung von Kraftstoffen, wobei die Rohrleitung (1) zumindest fünf Schichten aufweist und zwar mit folgendem Schichtaufbau von außen nach innen:
- eine Außenschicht (2) aus zumindest einem Polyolefin,
- eine erste Trägerschicht (4) aus Polyamid,
- eine Sperrschicht (5) aus zumindest einer Komponente aus der Gruppe "EVOH, Fluorpolymer",
- eine Zwischenschicht (6),
- eine Innenschicht (7) aus Polyethylen,
wobei die erste Trägerschicht (4) eine größere Dicke aufweist als die Sperrschicht (5), wobei die erste Trägerschicht (4) eine größere Dicke aufweist als die Innenschicht (7),
wobei die Zwischenschicht (6) als zweite Trägerschicht ausgebildet ist und aus Polyamid besteht bzw. im Wesentlichen besteht, wobei die Zwischenschicht eine größere Dicke aufweist als die Innenschicht (7)
und wobei die Gesamtschichtdicke der Rohrleitung (1) 0,7 bis 2,5 mm, vorzugsweise 0,8 bis 2 mm und bevorzugt 0,85 bis 1,8 mm beträgt.

2. Rohrleitung nach Anspruch 1, wobei die Außenschicht aus Polyethylen, insbesondere aus HDPE besteht bzw. im Wesentlichen aus Polyethylen, insbesondere im Wesentlichen aus HDPE besteht.

3. Rohrleitung nach einem der Ansprüche 1 oder 2, wobei die Dicke der Außenschicht 5 % bis 60 %, vorzugsweise 7 % bis 45 % der Gesamtwanddicke der Rohrleitung (1) beträgt,

4. Rohrleitung nach einem der Ansprüche 1 bis 3, wobei zwischen der Außenschicht (2) und der ersten Trägerschicht (4) zumindest eine Haftvermittlerschicht (3), vorzugsweise eine Haftvermittlerschicht (3) zwischengeschaltet ist.

5. Rohrleitung nach Anspruch 4, wobei die Dicke der Haftvermittlerschicht (3) 3 % bis 30 %, bevorzugt 5 % bis 20 % der Gesamtwanddicke der Rohrleitung (1) beträgt.

6. Rohrleitung nach einem der Ansprüche 1 bis 5, wobei die erste Trägerschicht (4) aus Polyamid 6 bzw. im Wesentlichen aus Polyamid 6 besteht.

7. Rohrleitung nach einem der Ansprüche 1 bis 5, wobei die erste Trägerschicht (4) aus zumindest einem bzw. einem Polyamid aus der Gruppe "Polyamid 612, Polyamid 12, Polyamid 10, Polyamid 11, Co-Polyamid 6/6.6, Co-Polyamid 6/12" besteht bzw. im Wesentlichen besteht.

8. Rohrleitung nach einem der Ansprüche 1 bis 7, wobei die Dicke der ersten Trägerschicht (4) 5 % bis 70 %, vorzugsweise 10 % bis 60 % und bevorzugt 15 % bis 60 % der Gesamtwanddicke der Rohrleitung (1) beträgt.

9. Rohrleitung nach einem der Ansprüche 1 bis 8, wobei die Dicke der Sperrschicht (5) 5 % bis 50 %, bevorzugt 10 % bis 40 % der Gesamtwanddicke der Rohrleitung (1) beträgt.

10. Rohrleitung nach einem der Ansprüche 1 bis 9, wobei die Zwischenschicht (6) aus Polyamid 6 bzw. im Wesentlichen aus Polyamid 6 besteht.

11. Rohrleitung nach einem der Ansprüche 1 bis 10, wobei die Zwischenschicht (6) bzw. die zweite Trägerschicht (6) aus zumindest einem bzw. einem Polyamid aus der Gruppe "Polyamid 612, Polyamid 12, Polyamid 10, Polyamid 11, Co-Polyamid 6/6.6, Co-Polyamid 6/12" besteht bzw. im Wesentlichen besteht.

12. Rohrleitung nach einem der Ansprüche 1 bis 11, wobei die Dicke der Zwischenschicht (6) 5 % bis 70 %, vorzugsweise 10 % bis 60 % und bevorzugt 15 % bis 60 % der Gesamtwanddicke der Rohrleitung (1) beträgt.

13. Rohrleitung nach einem der Ansprüche 1 bis 12, wobei die Zwischenschicht (6) als Haftvermittlerschicht ausgebildet ist und vorzugsweise eine Haftvermittlerschicht auf Basis eines Polyamids oder eine Haftvermittlerschicht auf Basis eines Polyolefins ist.

14. Rohrleitung nach einem der Ansprüche 1 bis 13, wobei die Innenschicht (7) aus HDPE bzw. im Wesentlichen aus HDPE besteht.

15. Rohrleitung nach einem der Ansprüche 1 bis 14, wobei die Dicke der Innenschicht 5 % bis 55 %, vorzugsweise 7 % bis 50 % und bevorzugt 10 % bis 40 % der Gesamtwanddicke der Rohrleitung (1) beträgt.

16. Rohrleitung nach einem der Ansprüche 1 bis 15, wobei die Außenschicht (2) eine größere Dicke aufweist als die Sperrschicht (5).

17. Rohrleitung nach einem der Ansprüche 1 bis 16, wobei die Rohrleitung durch Koextrusion hergestellt ist.

## Claims

1. Multi-layer motor vehicle pipeline (1), in particular for transporting fuels, wherein the pipeline (1) comprises at least five layers, with the following layer structure from outside to inside:
- an outer layer (2) made of at least one polyolefin,
- a first support layer (4) made of polyamide,
- a barrier layer (5) made of at least one component from the group "EVOH, fluoropolymer,"
- an intermediate layer (6),
- an inner layer (7) made of polyethylene,
wherein the first support layer (4) has a greater thickness than the barrier layer (5), wherein the first support layer (4) has a greater thickness than the inner layer (7),
wherein the intermediate layer (6) is designed as a second support layer and consists or substantially consists of polyamide, wherein the intermediate layer has a greater thickness than the inner layer (7)
and wherein the total layer thickness of the pipeline (1) is 0.7 to 2.5 mm, preferably 0.8 to 2 mm and preferably 0.85 to 1.8 mm.

2. Pipeline according to claim 1, wherein the outer layer consists of polyethylene, in particular of HDPE, or consists substantially of polyethylene, in particular substantially of HDPE.

3. Pipeline according to either of claims 1 or 2, wherein the thickness of the outer layer is 5% to 60%, preferably 7% to 45% of the total wall thickness of the pipeline (1),

4. Pipeline according to any of claims 1 to 3, wherein at least one adhesive layer (3), preferably one adhesive layer (3), is interposed between the outer layer (2) and the first support layer (4).

5. Pipeline according to claim 4, wherein the thickness of the adhesive layer (3) is 3% to 30%, preferably 5% to 20% of the total wall thickness of the pipeline (1).

6. Pipeline according to any of claims 1 to 5, wherein the first support layer (4) consists of polyamide 6 or substantially of polyamide 6.

7. Pipeline according to any of claims 1 to 5, wherein the first support layer (4) consists or substantially consists of at least one or of a polyamide from the group "polyamide 612, polyamide 12, polyamide 10, polyamide 11, co-polyamide 6/6.6, co-polyamide 6/12."

8. Pipeline according to any of claims 1 to 7, wherein the thickness of the first support layer (4) is 5% to 70%, preferably 10% to 60% and preferably 15% to 60% of the total wall thickness of the pipeline (1).

9. Pipeline according to any of claims 1 to 8, wherein the thickness of the barrier layer (5) is 5% to 50%, preferably 10% to 40% of the total wall thickness of the pipeline (1).

10. Pipeline according to any of claims 1 to 9, wherein the intermediate layer (6) consists of polyamide 6 or substantially of polyamide 6.

11. Pipeline according to any of claims 1 to 10, wherein the intermediate layer (6) or the second support layer (6) consists or substantially consists of at least one or of a polyamide from the group "polyamide 612, polyamide 12, polyamide 10, polyamide 11, co-polyamide 6/6.6, co-polyamide 6/12."

12. Pipeline according to any of claims 1 to 11, wherein the thickness of the intermediate layer (6) is 5% to 70%, preferably 10% to 60% and preferably 15% to 60% of the total wall thickness of the pipeline (1).

13. Pipeline according to any of claims 1 to 12, wherein the intermediate layer (6) is designed as an adhesive layer and is preferably an adhesive layer based on a polyamide or an adhesive layer based on a polyolefin.

14. Pipeline according to any of claims 1 to 13, wherein the inner layer (7) consists of HDPE or substantially of HDPE.

15. Pipeline according to any of claims 1 to 14, wherein the thickness of the inner layer is 5% to 55%, preferably 7% to 50% and preferably 10% to 40% of the total wall thickness of the pipeline (1).

16. Pipeline according to any of claims 1 to 15, wherein the outer layer (2) has a greater thickness than the barrier layer (5).

17. Pipeline according to any of claims 1 to 16, wherein the pipeline is manufactured by coextrusion.

## Revendications

1. Tuyauterie multicouche pour véhicule automobile (1), en particulier pour le passage de carburants, dans laquelle la tuyauterie (1) présente au moins cinq couches et ce, avec une structure de couches se suivant de l'extérieur vers l'intérieur :
- une couche extérieure (2) constituée d'au moins une polyoléfine,
- une première couche de support (4) constituée de polyamide,
- une couche barrière (5) constituée d'au moins un composant choisi dans le groupe « EVOH, polymère fluoré »,
- une couche intermédiaire (6),
- une couche intérieure (7) constituée de polyéthylène,
dans laquelle la première couche de support (4) présente une épaisseur supérieure à celle de la couche barrière (5), dans laquelle la première couche de support (4) présente une épaisseur supérieure à celle de la couche intérieure (7),
dans laquelle la couche intermédiaire (6) est conçue comme une seconde couche de support et est constituée ou est sensiblement constituée de polyamide, dans laquelle la couche intermédiaire présente une épaisseur supérieure à celle de la couche intérieure (7)
et dans laquelle l'épaisseur totale de couches de la tuyauterie (1) va de 0,7 à 2,5 mm, de préférence de 0,8 à 2 mm et plus préférablement de 0,85 à 1,8 mm.

2. Tuyauterie selon la revendication 1, dans laquelle la couche extérieure est constituée de polyéthylène, en particulier de PEHD, ou est sensiblement constituée de polyéthylène, en particulier est sensiblement constituée de PEHD.

3. Tuyauterie selon l'une des revendications 1 ou 2, dans laquelle l'épaisseur de la couche extérieure va de 5 % à 60 %, de préférence de 7 % à 45 %, de l'épaisseur totale de paroi de la tuyauterie (1),

4. Tuyauterie selon l'une des revendications 1 à 3, dans laquelle au moins une couche d'agent adhésif (3), de préférence une couche d'agent adhésif (3), est intercalée entre la couche extérieure (2) et la première couche de support (4).

5. Tuyauterie selon la revendication 4, dans laquelle l'épaisseur de la couche d'agent adhésif (3) représente 3 % à 30 %, de préférence 5 % à 20 %, de l'épaisseur totale de paroi de la tuyauterie (1).

6. Tuyauterie selon l'une des revendications 1 à 5, dans laquelle la première couche de support (4) est constituée de polyamide 6 ou est sensiblement constituée de polyamide 6.

7. Tuyauterie selon l'une des revendications 1 à 5, dans laquelle la première couche de support (4) est constituée ou est sensiblement constituée d'au moins un polyamide ou d'un polyamide choisi dans le groupe « polyamide 612, polyamide 12, polyamide 10, polyamide 11, co-polyamide 6/6.6, co-polyamide 6/12 ».

8. Tuyauterie selon l'une des revendications 1 à 7, dans laquelle l'épaisseur de la première couche de support (4) représente 5 % à 70 %, de préférence 10 % à 60 % et plus préférablement 15 % à 60 %, de l'épaisseur totale de paroi de la tuyauterie (1).

9. Tuyauterie selon l'une des revendications 1 à 8, dans laquelle l'épaisseur de la couche barrière (5) représente 5 % à 50 %, de préférence 10 % à 40 %, de l'épaisseur totale de paroi de la tuyauterie (1).

10. Tuyauterie selon l'une des revendications 1 à 9, dans laquelle la couche intermédiaire (6) est constituée de polyamide 6 ou est sensiblement constituée de polyamide 6.

11. Tuyauterie selon l'une des revendications 1 à 10, dans laquelle la couche intermédiaire (6) ou la seconde couche de support (6) est constituée ou est sensiblement constituée d'au moins un polyamide ou d'un polyamide choisi dans le groupe « polyamide 612, polyamide 12, polyamide 10, polyamide 11, co-polyamide 6/6.6, co-polyamide 6/12 ».

12. Tuyauterie selon l'une des revendications 1 à 11, dans laquelle l'épaisseur de la couche intermédiaire (6) représente 5 % à 70 %, de préférence 10 % à 60 % et plus préférablement 15 % à 60 %, de l'épaisseur totale de paroi de la tuyauterie (1).

13. Tuyauterie selon l'une des revendications 1 à 12, dans laquelle la couche intermédiaire (6) est réalisée sous la forme d'une couche d'agent adhésif et est de préférence une couche d'agent adhésif à base d'un polyamide ou une couche d'agent adhésif à base d'une polyoléfine.

14. Tuyauterie selon l'une des revendications 1 à 13, dans laquelle la couche intérieure (7) est constituée de PEHD ou est sensiblement constituée de PEHD.

15. Tuyauterie selon l'une des revendications 1 à 14, dans laquelle l'épaisseur de la couche intérieure représente 5 % à 55 %, de préférence 7 % à 50 % et plus préférablement 10 % à 40 %, de l'épaisseur totale de paroi de la tuyauterie (1).

16. Tuyauterie selon l'une des revendications 1 à 15, dans laquelle la couche extérieure (2) présente une épaisseur supérieure à celle de la couche barrière (5).

17. Tuyauterie selon l'une des revendications 1 à 16, dans laquelle la tuyauterie est fabriquée par coextrusion.
